# EUROPEAN PATENT SPECIFICATION

(11) **EP 0 947 079 B1**
(45) Date of publication and mention of the grant of the patent: **16.04.2008**
(21) Application number: 97948054.8
(22) Date of filing: 20.11.1997
(51) Int. Cl.: H04L 12/66, H04L 12/46, H04M 11/00, H04M 7/00

(54) **SYSTEM AND METHODS FOR INTERNET TELEPHONY**
SYSTEM UND VERFAHREN FÜR INTERNET-TELEFONIE
SYSTEME ET PROCEDES POUR TELEPHONIE SUR INTERNET

(30) Priority: 09.12.1996 SE 9604534
(43) Date of publication of application: 06.10.1999
(73) Proprietor: TELIASONERA AB, 123 86 Farsta (SE)
(72) Inventor: ALMGREN, Gunnar, S-121 33 Enskededalen (SE)
(74) Representative: Akerman, Marten Lennart
(86) International application number: PCT/SE1997/001945
(87) International publication number: WO 1998/026543

(56) References cited:
- EP-A- 0 781 015
- WO-A-97/14238
- WO-A-97/16916
- WO-A-97/27692
- WO-A-97/33412
- COMPUTER SWEDEN, No. 73, November 1996, (Sweden), T. ZIRN, "Billig Internet-Telefoni - Via Vanliga Telefoner", page 12.
- FUNKSCHAU, No. 17, August 1997, (Germany), D. REUSCH, "Telefonieren Ueber das Internet", pages 44-47.

## Description

The invention relates to an Internet telecommunication system and methods for processing telephone calls over the Internet.

It is known to provide telephony, or telephony-like, services between computers attached to the Internet. In fact, such services are already widely used on the Internet. However, viable solutions for interworking between telephones which are connected to the telephone (POTS) network, and computers which are attached to the Internet, are not readily available. A gateway system that bridges the POTS network and the Internet must perform a number of functions, namely, bridging, routing address/number conversion, charging and call monitoring.

The idea of routing telephone calls via the Internet is known from T. Zirn, "Billig Internettelefoni, via vanliga telefoner", Computer Sweden, No. 73, Nov. 1996 (Sweden).

A gateway system must bridge the synchronous POTS network with the asynchronous Packet Network (Internet). Since most Voice-over-Network (VON) implementation apply some kind of voice compression scheme which differs from the PCM (Pulse Code Modulation)/ADPCM (Adaptive Differential PCM) schemes used in POTS networks, it will be necessary for the gateway system to provide a coding/decoding function.

As for routing address/number conversion, a POTS telephone user must be able to address, i.e. dial, an Internet computer either by using some special dialling system for IP (Internet Protocol)-addresses. for example, Ex 131#115#49#175, or by aliasing the Internet computers in the POTS numbering plan and having the gateway translate into IP-numbers using pre-configured tables. The Internet computer user must be able to dial international telephone numbers and the system should be adapted to select the gateway that will minimise the POTS network distance used. At least, a gateway located in the country indicated by the country code in the dialled number should be selected. The process should be automatic and the user should not be required to manually select a suitable gateway from the potentially large set of such gateways.

Also, the gateway system must provide for the charging the users of the gateway service. For POTS initiated calls, a system using primary rate (071-) numbers can be used. For Internet initiated calls, other methods must be applied since the Internet does not provide a native charging mechanism like the Toll Ticketing applied in the POTS network.

The gateway system must also be able to monitor call progress and clear broken connections. The gateway must, therefore, perform both application level as well as Transport and Network level functions.

Furthermore, a pair of gateway systems should be able to establish telephony connections, i.e. POTS telephone to POTS telephone over the Internet.

The invention relates to a system according to claim 1 and methods according to claims 8, 15 and 20. Preferred embodiments are set forth in the dependent claims.

The foregoing and other features according to the present invention will be better understood from the following description with reference to the accompanying drawings, in which:
Figure 1 diagrammatically illustrates an Internet communication system according to the present invention;
Figure 2 illustrates a simplified 'time diagram' which summarises the interactions of the various phases of a call process using the Internet communication system of the present invention;
Figure 3 diagrammatically illustrates, in the form of a block diagram, an architecture for the Gateway 1 shown in Figure 1 of the accompanying drawings; and
Figure 4 sets out, in a table, the connectivity scenarios for the Internet communication system of the present invention.

In accordance with the following, means are provided to enable a service provider to operate a set of gateways as a coherent system. It will be seen from subsequent description that a gateway locator provides a starting point for interaction with Internet computer users and a uniform interface to the set of gateways. The underlying assumptions of the present invention are that the Internet will provide a more cost-effective long-distance transport of voice traffic and that the gateway selected for a call towards a POTS telephone should be as close as possible to that particular POTS access.

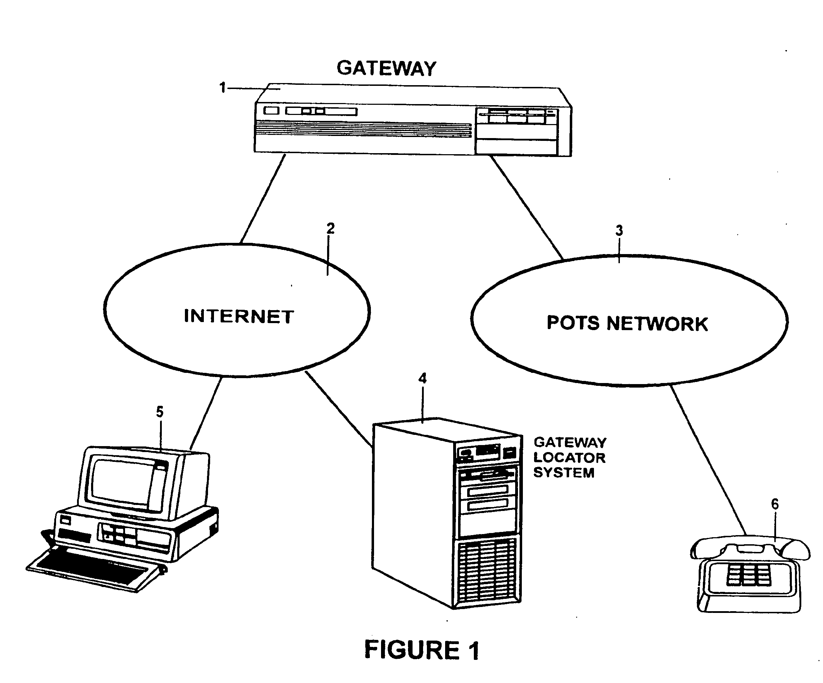

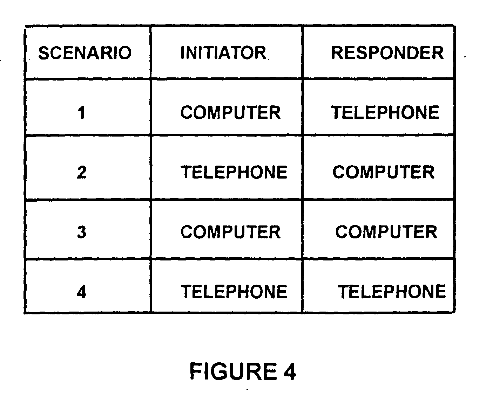

An Internet communication system, according to the present invention, is diagrammatically illustrated in Figure 1 of the accompanying drawings and is adapted to support the connectivity scenarios set out in the table shown in Figure 4 of the accompanying drawings. The communication system includes, at least, a Gateway 1 connected to the Internet 2 and to a POTS Network 3, a Gateway Locator System 4 connected to the Internet 2, a computer 5 connected to the Internet 2 and a telephone 6 connected to the POTS Network 3.

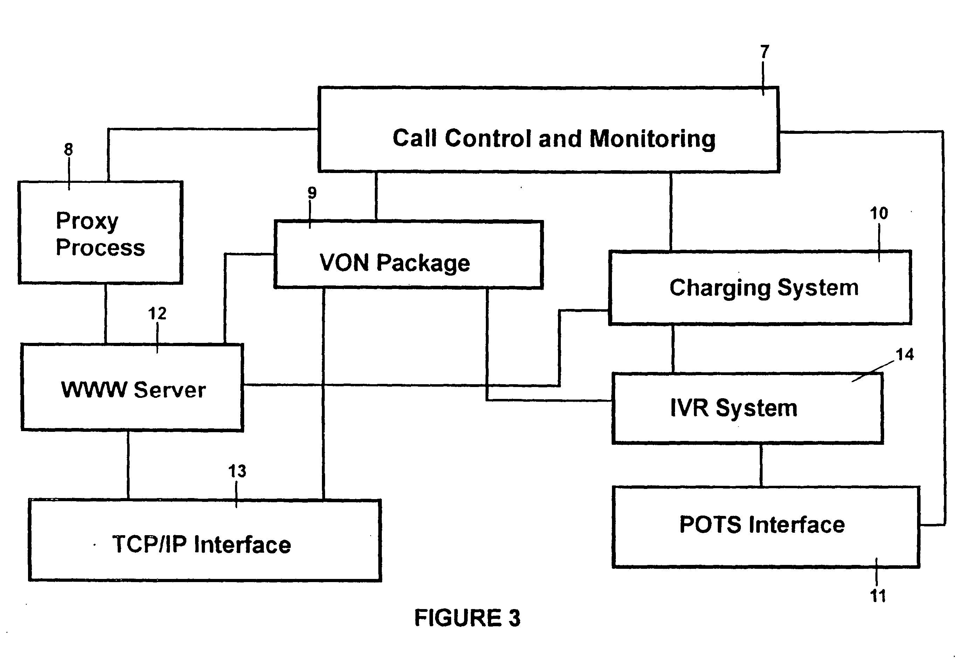

The Gateway 1 of Figure 1 consists of a set of communication sub-systems which are diagrammatically illustrated, in the form of a block diagram, in Figure 3 of the accompanying drawings.

As illustrated in Figure 3, the Gateway 1 architecture includes a Call Control and Monitoring Sub-system 7 for controlling and monitoring operation of sub-systems 8, 9, 10 and 11, respectively for a Proxy Process, to be subsequently outlined, a VON-package, a Charging System and a POTS Interface. A WWW-server 12 is connected to Sub-systems 8, 9 and 10, and to a Transmission Control Protocol (TCP)/IP Interface 13. An Interactive Voice Responsive (IVR) Sub-system 14 is connected to the Sub-systems 9, 10 and 11.

The hardware platform for the Gateway 1 is a high-performance personal computer (PC), for example, a PC with a Pentium processor and equipped with a TCP/IP Interface card and an IVR board with POTS interface.

The Gateway Locator System 4 of Figure 1 consists of a WWW-server and a DNS (Domain Name System) sub-system.

In operation, the Gateway 1 is primarily targeted at scenarios 1 and 2 of Figure 4. In the case of scenario 4 of Figure 4, the Internet 2 is really acting as a transport network for POTS. In the case of scenario 3 of Figure 4, the present invention gives very little added value, compared to existing solutions for a voice-over the Internet service, but it is included in order to facilitate heterogeneous teleconferencing with both POTS telephones and computers.

The Gateway Locator System 4 provides a comprehensive interface to a particular service providers gateway system. The Internet user interacts with the Gateway Locator System 4 to find the most appropriate gateway to use for a particular call. Likewise, for calls from POTS to POTS over the Internet 2, the ingress (entry) gateway uses the Gateway Locator System 4 to find the most appropriate egress (exit) gateway.

The dialogue with the Gateway Locator System 4, as well as the control dialogue between an Internet computer 5 and the Gateway 1 is performed by means of the World Wide Web (WWW).

The call process for the Internet telecommunication system of the present invention can be divided into number of phases, namely, a gateway location phase, a call connect phase, a call connected phase and a call disconnect phase. The first phase may be shortcut if the user already knows an appropriate gateway.

The required interactions for each of these phases will be subsequently outlined for the four interconnection scenarios referred to above and set out in the table shown in Figure 4 of the accompanying drawings.

In the case of the first scenario, i.e. scenario 1 of Figure 4 where a call is initiated by a computer user and the called party (responder) is a POTS telephone subscriber the call process is as follows:

### A. Gateway location phase

1. A user of the computer 5 uses his/her web-browser to enter (dial) the number, including the country code, of the POTS telephone 6 in an HTML (Hypertext Markup Language) form, provided by the WWW-server at the Gateway Locator System 4. The computer user also has to choose, or pre-configure, the required VON-package and Payment System for the call.
2. The computer user then pushes a 'Submit' button and the web-browser validates the dialled number using a Java-script associated with the HTML FORM and, if syntactically correct, submits the information to the WWW-server (locator). Java-script is scripting language for the WWW and is used, in the present invention, to validate user input in WWW-forms.
3. The WWW-server consults a Naming System that finds the most suitable gateways for this particular call.
4. The WWW-server generates new web-pages consisting of a clickable gateway button, with associated URL (Universal Resource Locator), corresponding to the first preference gateway, second preference gateway etc.. Associated with each Universal Source Locator (URL) is either the number dialled by the computer user, or a new number in those cases where a redirect was encountered in the search phase. The same HTML syntax, as for search-engines, is used, i.e. <a href="UR-of-gateway?phone-no+VONpackage+BillingMethod"> best-gw </a>. The text following the "?" is interpreted, not as search strings, but as the dialled number, VON-package to be used, and Billing Method to be used, respectively.
5. The computer user then clicks the gateway button and is connected to the web-server at the Gateway 1 and the number, VON and billing information is transferred to the Gateway 1. The Internet Protocol (IP) address of the calling computer 5 is automatically transferred by means of HTTP (Hypertext Transfer Protocol).

### B. Connection phase

6. The web-server of the Gateway 1 transfers a web-page with an 'Accept' and an 'Abort' button to the Internet computer 5.
7. The Gateway 1 establishes a connection to the calling computer 5 using the identified VON-package.
8 The computer user accepts the incoming call (if not automatic accept).
9. An Interactive Voice Response (IVR) system of the Gateway 1 issues a voice message signal to inform the computer user concerning:
   - the charges which apply to the telephone number he/she has dialled; and
   - the Payment System which has been chosen;
   and to instructs him/her to push the 'Accept' button.
10. The computer user pushes the 'Accept' button, (or the 'Abort' button in which case the Gateway 1 is disconnected from the server). A Call Progress Web-page then appears. The Call Progress Web-page contains a Java-script that periodically requests reload of this page from the server (using a loop with the 'History.go(0)' statement). The Call Progress Web-page contains information about Call Status (Connected/Disconnected/Connecting) and the accumulated cost for the call. If electronic cash (Ecash) is used, the page shows, in a 'time left' field, how many seconds are left for use by the caller before a new deposit is necessary.
11. The web-server of the Gateway 1 attempts to establish a call connection to the POTS telephone number which has been dialled by the computer user. The computer user can listen to the call progress through his/her VON-package. If Ecash is used as the payment method, an initial payment request is issued to the computer user.
12. When a call connection is established, the POTS telephone subscriber answers the call. If Ecash is used as the payment method, an initial payment request is issued to the computer user, otherwise a charging record is initiated.

### C. Call connected phase

During the call connected phase, the Call Progress Web-page informs the computer user of the current status of the call. If Ecash is used, the Call Progress Web-page will provide the user with a 'New Deposit' button. When the computer user pushes this button, a CGI (Common Gateway Interface)-script is started at the web-server which will issue an Ecash payment request to the computer user. After receiving the deposit, the web-server will increase the 'time left' field on the Call Progress Web-page. The WWW-server at the Gateway 1 and Gateway Locator System 4 applies CGI to communicate with other programs.

### D. Disconnect phase

13. If either party disconnects, the web-server of the Gateway 1 modifies the Call Progress Web-page to inform the computer user that the call has been terminated (and the reason for termination). The computer user is given the option, through the use of clickable buttons, to either reconnect, or 'quit', the call. If a charging record is open it is now closed.
14. The computer user clicks the 'quit' button and is connected to the Gateway Locator System 4.

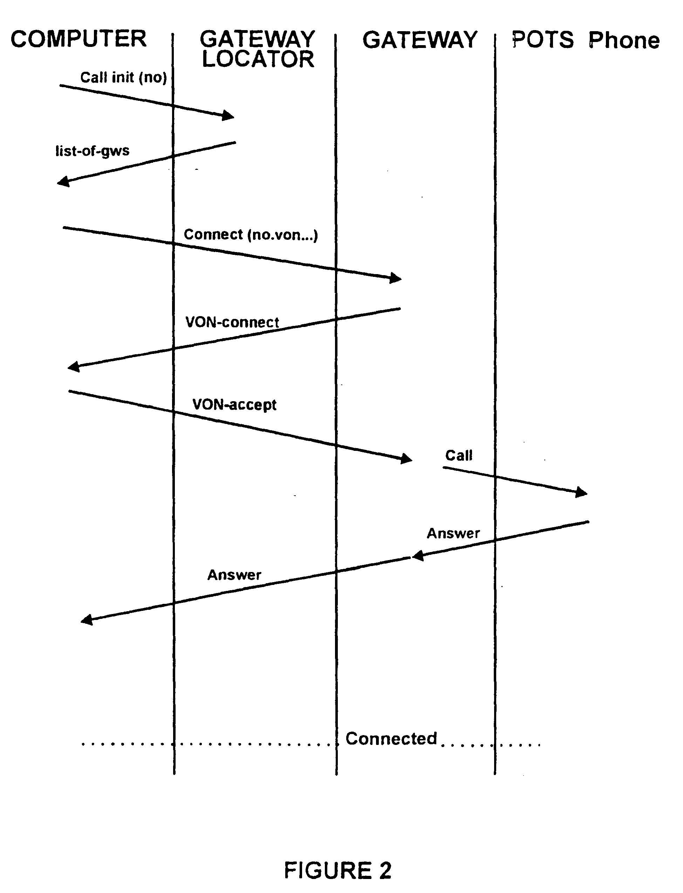

The 'time diagram' illustrated in Figure 2 of the accompanying drawings is a simplified summary of the call process outlined above, i.e. some of the WWW interactions, referred to above, in the Gateway Location System 4 and connection phases have been omitted for the purposes of this summary.

In the case of the second scenario, i.e. scenario 2 of Figure 4 where a call is initiated by a POTS telephone 6 and the called party (responder) is a computer 5, the call process is as follows:

### A. Gateway location phase.

1. A user of the POTS telephone 6 dials the number to his Service Provider and is connected to an available gateway. The Service Provider may use automatic Call Distribution Techniques to route the call to an appropriate gateway thus achieving load balance between gateways.

### B. Connection phase

2. The POTS telephone user receives a voice message signal (prompt) requesting him/her to select a connection to another POTS-phone, or an Internet computer 5.
3. The telephone user selects the Internet computer 5 using touch-tone dialling. If access is through a freephone-number, the telephone user is requested to provide a PIN-code. Access can also be obtained through 'primary rate' in which case additional charging is not needed.
4. The telephone user is asked to enter an IP-number in format 1111 #2222#3333#4444#, or, alternatively, in domain name format aaaa#bbb#cc using touch-tone coding of the alphabet, i.e. a single click of push button '1' for an 'a', a double click for a 'b' etc..
5. The input is read back to the telephone user by the Gateway 1 for verification by the telephone user.
6. The Web-server of the Gateway 1 consults a Domain Name Service (DNS) to verify the address of the called computer 5 and (possibly) the VON-package capability of the computer 5 - this process requires a DNS extension.
7. The Gateway 1, on verification of the address, establishes a connection to the computer 5, using the appropriate VON-package. The POTS telephone user can hear the call progress audio signals.
8. When the connection has been established, the computer user answers the call.

### C. Call connected phase

Not applicable with this scenario.

### D. Disconnect phase

9. Either party disconnects. If the computer user disconnects (hangs up), the POTS telephone user has the option to initiate another call, or hang up.

In the case of the third scenario, i.e. scenario 3 of Figure 4 where both the calling and called party is a computer user, the call process is identical to scenario 1 of Figure 4, i.e. computer 5 to POTS telephone 6, except that an IP-number, or domain address, rather than a telephone number is entered. As stated above, this scenario gives very little added value, compared to existing solutions for a two-party voice-over the Internet service, but may have relevance for multi-party teleconferencing with both POTS telephones and computers.

In the case of the fourth scenario, i.e. scenario 4 of Figure 4 where both the calling and called party is a POTS telephone user, the call process involves the use of two gateways, i.e. an 'Ingress' gateway for initiating the POTS telephone user's point of entry to the Internet 2 and an 'Egress' gateway via which the call will exit the Internet 2 and enter the POTS Network 3 to access the called number.

It will be seen from subsequent description that the process for selecting the 'Egress' gateway is identical to the gateway selection process of scenario 1 of Figure 4, i.e. computer 5 to POTS telephone 6. In fact, it will be seen that a 'proxy process' is initiated at the selected 'Ingress' gateway which involves contacting the Gateway Locator System 4 to find the 'Egress' gateway etc. in accordance with scenario 1. In practice, it will appear to the 'Egress' gateway that a computer user is trying to make the call, but it is, in fact, the 'proxy process'.

### A. Gateway location phase

1. The user of a POTS telephone dials the required number to his Service Provider and is connected to an available gateway. The Service Provider may use automatic Call Distribution Techniques to route the call to an appropriate gateway thus achieving load balance between gateways.
2. The user receives a voice message signal (prompt) requesting him/her to select a connection to a POTS-phone, or an Internet computer 5.
3. The POTS telephone user selects the Internet computer 5 using touch-tone dialling. If access is through a freephone-number, the telephone user is requested to provide a PIN-code. Access can also be obtained through 'primary rate' in which case additional charging is not needed.
4. The telephone user is requested to enter the telephone number of the destination, or called, telephone user.
5. The input is read back to the telephone user by the gateway for verification by the telephone user.
6. On verification of the called party number, the gateway starts the proxy process for this POTS telephone user.
7. The Gateway Location System 4 is then contacted, as part of the proxy process, and the remaining interactions in the 'Gateway location' phase are identical to those of the gateway location phase of scenario 1 of Figure 4.

### B. Connection phase

The interactions in the connection phase are identical to those of the corresponding phase of scenario 1 of Figure 4.

### C. Call connected phase

The interactions in the call connected phase are identical to those of the corresponding phase of scenario 1 of Figure 4.

### D. Disconnect phase

8. Either party disconnects. If the called party disconnects (hangs up), the calling party, i.e. the POTS telephone user, has the option to initiate another call, or hang up.

The present invention is based on the integration of a set of different sub-system technologies in a single comprehensive telecommunications system. The individual sub-system technologies are briefly outlined in the following paragraphs.

A Voice over Network, or 'VON', is a set of emerging technologies for carrying voice traffic over packet networks. A VON-package known as 'IPHONE', from Vocaltec, is the widely used package, although other commercial, as well as public domain packages, are also readily available. All that is needed to use a VON-package is, typically, a 486 computer with 'Windows' software, a soundcard and a modem for connection to the Internet and having a reasonable operating speed, i.e. a minimum of 14.4 kbits/s.

Interactive Voice Response (IVR) systems are used to build information retrieval systems for POTS-telephone users using touch-tone dialling. A common application for these systems is known as 'Fax-Back'. An IVR system, typically, includes a powerful personal computer (PC) equipped with a soundcard and a special purpose board for handling the PC user's interaction with a communication system through voice-prompting and DTMF (Dual Tone Multi Frequency)-signalling. Typically, the special purpose board is adapted to process user dialling information and to transfer this information to a central logic system through a higher-level application interface. Advanced IVR special purpose boards interface directly to digital lines and provide functions for µ/A-law Pulse Code Modulation (PCM), as well as Adaptive Differential PCM (ADPCM) and GSM (Global System for Mobile Communication) voice coding/decoding using Digital Signal Processor (DSP) technology.

Electronic cash, or Ecash, is designed for secure payments from any personal computer to any other workstation, over email, or the Internet. Ecash has the privacy of paper cash, while achieving the high security required for electronic network environments exclusively through innovations in public key cryptography. With Ecash client software, a customer can withdraw Ecash, i.e. a form of digital money, from a bank and store it on his/her local personal computer. The personal computer user can then spend the digital money at any shop, or for any required service, which accepts payment by Ecash, without first opening an account with the shop/service provider concerned, or having to transmit credit card numbers. Because the received Ecash is for the full monetary value of the transaction, shops/service providers can instantly provide the requested goods, or services. Person-to-person payments can also be made with Ecash. Ecash can be used with the World Wide Web (WWW) to construct 'Cybershops'. Ecash server software can interact with a web-server through CGI-scripts in such a way that a 'Payment' request is issued to the client whenever the client clicks a particular "link" on the web-page. The design is really aimed at 'Cybershops' which are selling information in the form of files but through intelligent engineering it can be used for a payphone type application as well. This is achieved through the Call Progress Web-page, as described above for scenario 1 of Figure 4 of the accompanying drawings.

A Domain Name System (DNS) provides a name service (primarily name-to-address) translation for the Internet.

As previously stated, Java-script is scripting language for the World Wide Web (WWW). In the Internet communication system of the present invention, Java-script is used to validate user input in WWW-forms. The WWW-server at the Gateway 1 and Gateway Locator System 4 applies CGI (Common Gateway Interface) to communicate with other programs.

The main advantages of the Internet communication system of the present invention are that:
- the system does not demand any extra functionality in the use of an Internet computer;
- the routing function, i.e. choice of gateway, is effected automatically;
- the interface between two systems is totally integrated with the World Wide Web (WWW);
- the system has an open architecture for realisation of different VON-packages;
- the system is adapted to cope both with regular traffic between the POTS Network and the Internet and with the transmission of POTS telecommunications over the Internet;
- the system works in the digital domain which makes for high capacity and enables the gateway to manage more parallel connections;
- the system is adapted to cope with both regular traffic and transmission;
- the system supports direct debiting, especially Ecash, which makes the present invention suitable for using payphones on the Internet.

## Claims

1. An Internet telecommunication system in which telephony and related services are provided using the Internet as a transmission for said services,
said telecommunication system includes a gateway system adapted to connect at least one telephone network to the Internet and to thereby facilitate telephony interworking, over the Internet, between:
• Internet users and users of said at least one telephone network; and
• said telephone network users, the system being **characterised**
**in that** said gateway system includes a coherent set of gateways, each one of which is adapted to connect a telephone network to the Internet, and a gateway locator system for locating one of the set of gateways which minimises the telephone network distance used for a particular telephone call and
**in that** a gateway includes a WWW server; a Voice-over-Network, VON, package; a charging system; proxy processing means; a TCP/IP interface; an Interactive Voice Response, IVR, system; POTS interface; and call control and monitoring means for controlling and monitoring said proxy process, VON package, and charging system, in that said WWW server is connected to said VON package, said charging system, said proxy process means, and said TCP/IP interface, and in that said IVR system is connected to said charging system and said POTS interface.

2. An Internet telecommunication system as claimed in claim 1, **characterised in that** said gateway has a hardware platform in the form of a personal computer, said computer including a TCP/IP interface and an IVR system.

3. An Internet telecommunication system as claimed in claim 1 or claim 2, **characterised in that** said telephone networks are POTS networks.

4. An Internet telecommunication system as claimed in any of the claims 1 to 3, **characterised in that** said gateway locator system includes a WWW server and a DNS system.

5. An Internet telecommunication system as claimed in any one of the preceding claims, **characterised in that** said gateway system is adapted to support a number of connectivity arrangements for said telephone networks and said Internet computers.

6. An Internet telecommunication system as claimed in claim 5, **characterised in that** said gateway system is adapted to support telephone call connections over the Internet between an Internet computer and a user of said telephone networks and vice versa.

7. An Internet telecommunication system as claimed in claim 5, or claim 6, **characterised in that** said gateway system is adapted to support telephone call connections over the Internet between Internet computers and between users of said telephone networks.

8. A method for processing telephone calls over the Internet, comprising
the steps of a gateway location phase, a call connection phase, a call connected phase and call disconnect phase, the calling party being a user of an Internet computer and the called party being a user of a telephone network, and
**characterised**
**in that** said gate location phase includes the steps of:
• the computer user:
- dialling the number, including the country code, of the called party, using a web-browser of the computer user, in an HTML FORM provided by a WWW server at said gateway locator system;
- choosing, or pre-configuring, a required Voice-over-Network, VON, package and Payment System for the call; and
- on actuation of a 'Submit' button, the web-browser validating the dialled number and, if syntactically correct, submitting the information to the WWW server at said gateway locator system;
• the WWW server consulting a Naming System that finds a gateway that minimises the telephone network distance used for the telephone call, the WWW server generating new web-pages including a clickable gateway button with associated URL, corresponding to at least a first preference gateway and a second preference gateway, each URL having associated therewith the number dialled by the computer user;
• the computer user then clicks a gateway button and is connected to a web-server at the gateway; and
• the dialled number is transferred to the gateway, together with the VON and billing information, the IP address of the calling computer being automatically transferred to the gateway by means of HTTP.

9. A method as claimed in claim 8, **characterised in that** validation of the dialled number is effected using a Java-script associated with the HTML FORM.

10. A method as claimed in any of claims 8 to 9, **characterised in that** said call connection phase includes the steps of:
• said gateway web-server transferring a web-page with an 'Accept' and an 'Abort' button to the calling computer;
• the gateway establishing a connection to the calling computer using said VON package;
• the computer user accepting the incoming call, if not automatically accepted;
• an IVR system of the gateway issuing a voice message signal to inform the computer user concerning:
- the charges which apply to the dialled telephone number; and
- the Payment System which has been chosen;
and to instructing the computer user to push the 'Accept' button;
• the computer user pushing the 'Accept' button and thereby causing a Call Progress Web-page to appear, said web-page containing a Java-script that periodically requests reload of this web-page from the server;
• the gateway web-server then attempts to establish a call connection to the dialled telephone number, said VON package enabling the computer user to listen to the progress of the call;
• when a call connection is established, the called party answers the call, and
• issuing an initial payment request to the computer user, if Ecash is used as the payment method, or Initiating a charging record for the call.

11. A method as claimed in claim 10, **characterised in that** said Call Progress Web-page contains information about the status of the call and, if Ecash is used, shows, in a 'time left' field, how many seconds are left for use by the calling party before a new deposit is necessary.

12. A method as claimed in claim 10, or claim 11, **characterised in that**, during said call connected phase, said method includes the steps of the Call Progress Web-page:
• informing the computer user of the current status of the call; and
• if Ecash is used, providing the computer user with a 'New Deposit' button for actuation by the computer user when a new Ecash deposit is required.

13. A method as claimed in claim 12, **characterised in that** actuation of said 'New Deposit' button causes a CGI-script to be started at the gateway web server which issues an Ecash payment request to the computer user, and **in that**, on receipt of an Ecash deposit, the gateway web-server increase the 'time left' field on the Call Progress Web-page.

14. A method as claimed in any of claims 10 to 13,
**characterised in that** said call disconnect phase includes the steps of:
• in the event that either party disconnects the call, the gateway web server modifies the Call Progress Web-page to inform the computer user that the call has been terminated, and the reason for termination;
• the computer user is given the option, through use of clickable buttons, to either reconnect, or 'quit' the call; and
• in the event that the computer user clicks the 'quit' button, the computer is connected to the gateway locator system and, if a charging record is open, it is now closed.

15. A method for processing telephone calls over the Internet, comprising
the steps of a gateway location phase, a call connection phase, a call connected phase and call disconnect phase,
the calling party being a user of a telephone network and the called party being a user of an Internet computer,
**characterised**
**in that** said gate location phase includes the step of the telephone network user dialling the number to the user's service provider and being routed to a gateway that minimises the telephone network distance used,
**in that** the routing of the call to a gateway is effected using automatic call distribution techniques to obtain load balance between gateways and
**in that** the call connection phase includes the steps of:
• the telephone network user:
- receiving a voice message signal requesting the selection of a connection to either another telephone or an Internet computer; and
- selecting the Internet computer using-touch-tone dialling;
• requesting the telephone network user to enter an IP-number, said entry being read back to the user by the gateway for verification by the user;
• a web-server of the gateway consulting a DNS to verify the address of the called Internet computer;
• the gateway, on verification of the address, establishing a connection to the called Internet computer using an appropriate Voice-over-Network, VON, package, the calling party being informed of the status of the call by call progress audio signals; and
• the called party answers the call, on establishment of the connection.

16. A method as claimed in claim 15, **characterised in that** access can be obtained either through:
• a freephone-number, in which case the calling party is requested to provide a PIN-code, or
• 'primary rate', in which case additional charging is not required.

17. A method as claimed in claim 15, or claim 16, **characterised in that** said IP-number is entered either in format 1111 #2222#3333#4444#, or in domain name format aaaa#bbb#cc using touch-tone coding of the alphabet, a single click of a push button '1' being used for an 'a', a double click for a 'b' etc.

18. A method as claimed in any of claims 15 to 17, **characterised in that** the gateway web-server verifies the VON package capability of the calling Internet computer.

19. A method as claimed in any of claims 15 to 18, **characterised in that**, during the call disconnect phase, either party can disconnect the call, and **in that**, in the event that the called party disconnects, the telephone network user has the option to either initiate another call, or hang up.

20. A method for processing telephone calls over the Internet, comprising
the steps of a gateway location phase, a call connection phase, a call connected phase and call disconnect phase,
both the calling and called parties being each a user of a telephone network,
**characterised**
**in that** the call process involves the use of two gateways, one of which is an Ingress gateway used to initiate a point of entry for a telephone network user to the Internet, and the other one of which is an Egress gateway being the gateway where the call exits the Internet and enters the telephone network to access the called number,
**in that** the gateway location phase for the Ingress gateway includes the steps of:
• the telephone network user:
- dialling the number to the user's service provider and being routed to a gateway that minimises the telephone network distance used for the call;
- receiving a voice message signal requesting selection of a connection to a telephone network, or an Internet computer; and
- selecting connection to a telephone network using touch-tone dialling,
• the telephone user is then requested to enter the telephone number of the called party, the input being read back to the telephone user by the gateway for verification by the telephone user;
• on verification of the called party number, the gateway initiates a proxy process for the called party involving contacting said gateway location system for location of an Egress gateway for the call;
• the dialled number is transferred to the Egress gateway, together with Voice- over-Network, VON, package and billing information.

21. A method as claimed in claim 20, **characterised in that** the routing of the call to a gateway is effected using automatic call distribution techniques to obtain load balance between gateways.

22. A method as claimed in claim 20, or claim 21, **characterised in that** access can be obtained either through:
• a freephone-number, in which case the calling party is requested to provide a PIN-code, or
• 'primary rate' in which case additional charging is not required.

23. A method as claimed in any of claims 20 to 22,
**characterised in that**, during the call disconnection phase, either party can effect disconnection, and **in that**, in the event that disconnection is effected by the called party , the calling party has the option to initiate another call, or hang up.

## Patentansprüche

1. Internet-Telekommunikationssystem, in welchem Telefonie und zugehörige Dienstleistungen unter Verwendung des Internets als als Übermittlung für die Dienstleistungen bereitgestellt werden,
wobei das Telekommunikationssystem ein Gateway-System aufweist, das so ausgebildet ist, dass wenigstens ein Telefonnetzwerk an das Internet angeschlossen werden kann und dadurch die Telefoniezusammenarbeit über das Internet erleichtert, zwischen:
• Internetnutzern und Nutzern von wenigstens dem einen Telefonnetz; und
• den Telefonnetzwerknutzern, wobei das System **dadurch gekennzeichnet ist,**
**dass** das Gateway-System einen kohärenten Satz von Gateways aufweist, von denen jeder so ausgebildet ist, dass er ein Telefonnetz mit dem Internet verbinden kann, und ein Gateway-Lokalisiersystem zum Lokalisieren eines Gateway-Satzes, der den Telefonnetzabstand, welcher für einen bestimmten Telefonanruf verwendet wird, minimiert, und
**dass** ein Gateway einen WWW-Server aufweist, ein Voice-over-Netzwerk-Modul, VON, ein Rechnungssystem, eine Vollmachtverarbeitungseinrichtung, eine TCP/IP-Schnittstelle, ein interaktives Sprachausgabe-IVR-System, eine POTS-Schnittstelle und eine Anrufsteuerungs- und Überwachungseinrichtung zum Steuern und Überwachen des Vollmachtvorganges, des VON-Moduls und des Rechnungssystems, dass der WWW-Server mit dem VON-Modul, dem Ladesystem, der Vollmachtverarbeitungeinrichtung und der TCP/IP-Schnittstelle verbunden ist, und dass das IVR-System mit dem Rechnungssystem und der POTS-Schnittstelle verbunden ist.

2. Internet-Telekommunikationssystem nach Anspruch 1, **dadurch gekennzeichnet, dass** der Gateway eine Hardware-Plattform in Form eines PCs hat, wobei der Computer eine TCP/IP-Schnittstelle und ein IVR-System aufweist.

3. Internet-Telekommunikationssystem nach Anspruch 1 oder 2, **dadurch gekennzeichnet, dass** die Telefonnetzwerke POTS-Netzwerke sind.

4. Internet-Telekommunikationssystem nach einem der Ansprüche 1 bis 3, **dadurch gekennzeichnet, dass** das Gateway-Lokalisiersystem einen WWW-Server und ein DNS-System enthält.

5. Internet-Telekommunikationssystem nach einem der vorstehenden Ansprüche, **dadurch gekennzeichnet, dass** das Gateway-System so ausgebildet ist, dass es eine Anzahl von Verbindungsanordnungen für die Telefonnetzwerke und die Internetcomputer unterstützt.

6. Internet-Telekommunikationssystem nach Anspruch 5, **dadurch gekennzeichnet, dass** das Gateway-System so ausgebildet ist, dass es die Telefonrufanschlüsse über das Internet zwischen einem Internetcomputer und einem Nutzer der Telefonnetzwerke und umgekehrt unterstützt.

7. Internet-Telekommunikationssystem nach Anspruch 5 oder 6, **dadurch gekennzeichnet, dass** das Gateway-System so ausgebildet ist, dass es Telefonanrufverbindungen über das Internet zwischen Internetcomputern und zwischen Nutzern der Telefonnetzwerke unterstützt.

8. Verfahren zum Verarbeiten von Telefonanrufen über das Internet, mit den Schritten einer Gateway-Lokalisierungsphase, einer Anrufverbindungsphase, einer Anrufverbundenphase und einer Anrufaufhängphase,
wobei der anrufende Teilnehmer ein Nutzer eines Internetcomputers ist und der angerufene Teilnehmer ein Nutzer einer Telefonnetzwerkes ist, **dadurch gekennzeichnet, dass** die Gateway-Lokalisierungsphase die Schritte aufweist, dass:
• der Computernutzer:
- die Nummer einschließlich des Ländercodes des angerufenen Teilnehmers unter Verwendung eines Web-Browsers des Computernutzers in einem HTML-Format wählt, das von einem WWW-Server an dem Gateway-Lokalisiersystem bereitgestellt wird;
- ein erforderliches Voice-over-Netzwerk-Paket und Bezahlsystems, VON, für den Anruf auswählt oder vorkonfiguriert; und
- bei Betätigung einer "Zustell"-Taste die gewählten Nummer durch den Web-browser validiert, und, wenn die Syntax korrekt ist, die Information zum WWW-Server in dem Gateway-Lokalisiersystem zustellt;
• der WWW-Server bei einem Benennungssystem anfragt, das ein Gateway findet, welches den Telefonnetzwerkabstand minimiert, der für den Telefonanruf verwendet wird, wobei der WWW-Server, der neue Web-Seiten erzeugt, eine anklickbare Gateway-Taste mit zugehöriger URL aufweist, die wenigstens einem ersten vorzuziehenden Gateway und einem zweiten vorzuziehenden Gateway entspricht, wobei jeder URL die Nummer zugeordnet ist, die von dem Computernutzer gewählt worden ist;
• der Computernutzer dann eine Gateway-Taste anklickt und mit einem Web-Server an dem Gateway verbunden ist; und
• die gewählte Nummer auf das Gateway zusammen mit dem VON und einer Gebühreninformation übertragen wird, wobei die IP-Adresse des anrufenden Computers automatisch mittels HTTP auf das Gateway übertragen wird.

9. Verfahren nach Anspruch 8, **dadurch gekennzeichnet, dass** die Validierung der angerufenen Nummer unter Verwendung eines Java-Scripts entsprechend dem HTML-Format bewirkt wird.

10. Verfahren nach einem der Ansprüche 8 bis 9, **dadurch gekennzeichnet, dass** die Anrufverbindungsphase die Schritte aufweist:
• Übertragen einer Web-Seite mit einer "Annahme"- und einer "Abbrechen"-Taste auf den anrufenden Computer durch den Gateway-Webserver;
• Errichten einer Verbindung mit dem anrufenden Computer unter Verwendung des VON-Moduls durch das Gateway;
• Annehmen des hereinkommenden Anrufs durch den Computernutzer, falls er nicht automatisch angenommen wird;
• Ausgeben eines Sprachmitteilungssignals durch ein IVR-System des Gateways, um den Computernutzer zu informieren bezüglich:
- der Gebühren, die für die gewählte Telefonnummer anwendbar sind; und
- dem Bezahlungssystem, das gewählt worden ist;
und der Instruktion, dass der Computernutzer die "Annahme"-Taste drückt;
• Drücken der "Annahme"-Taste durch den Computernutzer und dadurch bewirken, dass eine Anrufbearbeitungs-Web-Seite erscheint, wobei die Web-Seite ein Java-Script enthält, welches periodisch ein Neuladen dieser Web-Seite vom Server anfordert;
• der Gateway-Web-Server dann versucht, eine Rufverbindung mit der angerufenen Telefonnummer zu errichten, wobei das VON-Modul ermöglicht, dass der Computernutzer dem Anruffortgang zuhören kann;
• wenn die Rufverbindung errichtet ist, der angerufene Teilnehmer den Anruf beantwortet, und
• Ausgeben einer anfänglichen Gebührenanfrage an den Computernutzer, falls E-Cash als Bezahlungsmethode verwendet wird, oder Auslösen einer Gebührenaufzeichnung für den Anruf.

11. Verfahren nach Anspruch 10, **dadurch gekennzeichnet, dass** die Anruf-Fortgangs-Webseite die Information bezüglich des Status des Anrufes hat und, falls E-Cash verwendet wird, in einem Feld für "übrige Zeit" zeigt, wie viele Sekunden zur Verwendung durch den anrufenden Teilnehmer übrig sind, bevor eine neue Einzahlung notwendig ist.

12. Verfahren nach Anspruch 10 oder 11, **dadurch gekennzeichnet, dass** während der Anrufverbindungsphase das Verfahren die Schritte der Anruf-Fortgangs-Webseite aufweist:
• Informieren des Computernutzers über den derzeitigen Status des Anrufs; und
• falls E-Cash verwendet wird, dem Computernutzer eine "neue Einzahlung"-Taste bereitstellen, damit der Computernutzer diese betätigen kann, wenn eine neue E-Cash-Einzahlung erforderlich ist.

13. Verfahren nach Anspruch 12, **dadurch gekennzeichnet, dass** die Betätigung der "neue Einzahlung"-Taste bewirkt, dass ein CGI-Skript am Gateway-Webserver gestartet wird, das eine E-Cash-Bezahlungsanfrage an den Computernutzer ausgibt, und dass bei Empfang einer E-Cash-Einzahlung der Gateway-Webserver das Feld der "übrigen Zeit" an der Anruf-Verlaufs-Webseite vergrößert.

14. Verfahren nach einem der Ansprüche 10 bis 13, **dadurch gekennzeichnet, dass** die Anrufauflegephase die Schritte aufweist:
• für den Fall, dass einer der Teilnehmer den Anruf aufhängt, modifiziert der Gateway-Webserver die Anruf-Verlaufs-Webseite, um den Computernutzer darüber zu informieren, dass der Anruf beendet worden ist, und den Grund für die Beendigung;
• dem Computernutzer die Option gegeben wird, durch Verwendung eines anklickbaren Knopfes entweder den Anruf erneut zu verbinden oder zu "löschen"; und
• für den Fall, dass der Computernutzer den "Löschen"-Knopf anklickt, der Computer mit dem Gateway-Lokalisiersystem verbunden ist, und wenn eine Gebührenaufzeichnung offen ist, diese nun geschlossen wird.

15. Verfahren zum Bearbeiten von Telefonanrufen über das Internet, mit
den Schritten einer Gateway-Lokalisierungsphase, einer Rufverbindungsphase, einer Anrufverbundenphase und einer Anruf-Aufhängphase,
wobei der anrufende Teilnehmer ein Nutzer eines Telefonnetzwerkes ist und der angerufene Teilnehmer ein Nutzer eines Internetcomputers ist,
**dadurch gekennzeichnet, dass** die Gateway-Lokalisierungphase den Schritt des Telefonnetzwerknutzers aufweist, Wählen des Nummer des Serviceproviders des Nutzers und dieser zu einem Gateway geroutet wird, das den verwendeten Telefonnetzwerkabstand minimiert,
indem das Routen des Anrufes zu einem Gateway unter Verwendung automatischer Anrufverteilungstechniken bewirkt wird, um eine Last-Balance zwischen Gateways zu erzielen, und
indem die Anrufverbindungsphase die Schritte aufweist:
• beim Telefonnetzwerknutzer:
- Empfangen eines Sprachmitteilungssignals, das die Wahl einer Verbindung entweder zu einem anderen Telefon oder zu einem Internetcomputer anfordert; und
- Wählen des Internetcomputers unter Verwendung einer Tastwahl;
• den Telefonnetzwerknutzer auffordern, eine IP-Nummer einzugeben, wobei dieser Eingang dem Nutzer durch das Gateway zur Verifizierung durch den Nutzer zurückgelesen wird;
• am Webserver des Gateways nach einer DNS nachfragen, um die Adresse des angerufenen Internetcomputers zu verifizieren;
• Errichten einer Verbindung mit dem angerufenen Internetcomputer bei Verifizierung der Adresse durch das Gateway unter Verwendung eines geeigneten Voice-over-Netwerk-VON-Moduls, wobei der anrufende Teilnehmer über den Status der Einzelwahlverfahren-Fortgang-Audiosignale informiert wird; und
• der angerufene Teilnehmer den Anruf bei Errichtung der Verbindung annimmt.

16. Verfahren nach Anspruch 15, **dadurch gekennzeichnet, dass** der Zugang erzielt werden kann entweder durch:
- eine gebührenfreie Nummer, in welchem Fall der anrufende Teilnehmer gebeten wird, einen BIN-Code bereitzustellen, oder
- eine "Primärrate", in welchem Fall eine zusätzliche Gebührenerhebung nicht erforderlich ist.

17. Verfahren nach Anspruch 15 oder 16, **dadurch gekennzeichnet, dass** die IP-Nummer entweder im Format 1111#2222#3333#4444# oder in einem Domainnamenformat aaaa#bbb#cc unter Verwendung der Tastwahlcodierung der Alphabets eingeben wird, wobei ein einzelner Klick eines Druckknopfes "1" für ein "a", eine Doppelklick für ein "b" etc. verwendet wird.

18. Verfahren nach einem der Ansprüche 15 bis 17, **dadurch gekennzeichnet, dass** der Gateway-Webserver das VON-Modulvermögen des anrufenden Internetcomputers verifiziert.

19. Verfahren nach einem der Ansprüche 15 bis 18, **dadurch gekennzeichnet, dass** während der Anschlussauflegephase jeder Teilnehmer den Anruf beenden kann, und dass für den Fall, dass der anrufende Teilnehmer aufhängt, der Telefonnetzwerknutzer die Option hat, entweder einen weiteren Anruf zu initiieren oder aufzuhängen.

20. Verfahren zur Bearbeitung von Telefonanrufen über das Internet, mit
den Schritten einer Gateway-Lokalisierungsphase, einer Anrufverbindungsphase, einer Anrufverbundenenphase und einer Anrufaufhängephase,
wobei sowohl der anrufende als auch der angerufene Teilnehmer jeweils ein Nutzer eines Telefonnetzwerkes sind,
**dadurch gekennzeichnet, dass** der Anrufvorgang die Nutzung von zwei Gateways mit sich bringt, von denen eines ein Ingress-Gateway ist, das dazu verwendet wird, einen Eintrittspunkt für einen Telefonnetzwerknutzer in das Internet zu initiieren, und das andere ein Egress-Gateway ist, das Gateway, wo der Anruf das Internet verlässt und in das Telefonnetzwerk eintritt, um auf die angerufene Nummer zuzugreifen,
indem die Gateway-Lokalisierungsphase für das Ingress-Gateway die Schritte aufweist:
• für den Telefonnetzwerknutzer:
- Wählen der Nummer des Serviceproviders des Nutzers und Routen zu einem Gateway, welches den Telefonnetzwerkabstand, welcher für den Anruf verwendet wird, minimiert;
- Empfangen eines Sprachmitteilungssignals, welches die Wahl einer Verbindung zu einem Telefonnetzwerk oder einem Internetcomputer anfordert; und
- Wählen einer Verbindung zu einem Telefonnetzwerk unter Verwendung einer Tastwahl;
• den Telefonnutzer dann auffordern, die Telefonnummer des anzurufenden Teilnehmers einzugeben, wobei die Eingabe zum Telefonnutzer durch das Gateway zurückgelesen wird, um durch den Telefonnutzer verifiziert zu werden;
• bei Verifizierung der angerufenen Teilnehmernummer Initiieren eines Vollmachtvorganges durch das Gateway für den angerufenen Teilnehmer, das das Kontaktieren des Gateway-Lokalisierungssystems zur Lokalisierung eines Egress-Gateways für den Anruf mit sich bringt;
• die angerufene Nummer auf das Egress-Gateway zusammen mit der Voice-over-Network, dem VON-Modul und der Gebühreninformation übertragen wird.

21. Verfahren nach Anspruch 20, **dadurch gekennzeichnet, dass** das Routen des Anrufs zu einem Gateway unter Verwendung von automatischen Anrufverteilungstechniken durchgeführt wird, um zwischen den Gateways eine Last-Balance zu erzielen.

22. Verfahren nach Anspruch 20 oder 21, **dadurch gekennzeichnet, dass** der Zugang erzielt werden kann entweder durch:
• eine gebührenfreie Nummer, in welchem Fall der anrufende Teilnehmer aufgefordert wird, einen PIN-Code bereitzustellen, oder
• eine "Primärrate", in welchem Fall eine zusätzliche Gebührenerhebung nicht erforderlich ist.

23. Verfahren nach einem der Ansprüche 20 bis 22, **dadurch gekennzeichnet, dass** während der Anrufunterbrechungsphase jeder Teilnehmer die Unterbrechung bewirken kann, und dass für den Fall, dass die Unterbrechung durch den anrufenden Teilnehmer bewirkt wird, der anrufende Teilnehmer die Option hat, einen weiteren Anruf zu initiieren oder aufzuhängen.

## Revendications

1. Système de télécommunication sur Internet dans lequel des services de téléphonie et associés sont assurés en utilisant Internet comme moyen de transmission desdits services,
ledit système de communication comporte un dispositif formant passerelle adapté afin de connecter au moins un réseau téléphonique à Internet et de faciliter ainsi des interactions par téléphonie, sur le réseau Internet, entre :
des utilisateurs d'Internet et des utilisateurs dudit au moins un réseau téléphonique ; et
lesdits utilisateurs de réseau téléphonique, le système étant **caractérisé en ce que** ledit dispositif formant passerelle comporte un ensemble cohérent de passerelles, chacune d'elles étant adaptée afin de connecter un réseau téléphonique à Internet, et un dispositif de localisation de passerelle destiné à localiser celle de l'ensemble de passerelles qui minimise la distance de réseau téléphonique utilisée pour un appel téléphonique particulier, et
**en ce qu'**une passerelle comporte un serveur de WWW ; un logiciel de transmission de voix sur réseau (VON) ; un système de facturation ; un moyen de traitement d'interface proxy; une interface TCP/IP ; un dispositif à réponse vocale interactif, IVR ; une interface de service téléphonique POTS ; des moyens de commande et de contrôle d'appel destinés à commander et à contrôler ledit traitement d'interface proxy, un logiciel de transmission VON, et un système de facturation, **en ce que** ledit serveur WWW est connecté audit logiciel de transmission VON, audit système de facturation, et audit moyen de traitement d'interface proxy, et à ladite interface TCP/IP, et **en ce que** ledit dispositif IVR est couplé audit système de facturation et à ladite interface de service téléphonique POTS.

2. Système de télécommunication sur Internet selon la revendication 1, **caractérisé en ce que** ladite passerelle présente une plate-forme matérielle sous la forme d'un ordinateur personnel, ledit ordinateur comportant une interface TCP/IP et un dispositif IVR.

3. Système de télécommunication sur Internet selon la revendication 1 ou la revendication 2, **caractérisé en ce que** lesdits réseaux téléphoniques sont des réseaux POTS.

4. Système de télécommunication sur Internet selon l'une quelconque des revendications 1 à 3, **caractérisé en ce que** ledit dispositif de localisation de passerelle comporte un serveur WWW et un système DNS.

5. Système de télécommunication sur Internet selon l'une quelconque des revendications précédentes, **caractérisé en ce que** ledit dispositif formant passerelle est adapté afin de supporter un certain nombre d'agencements de gestion de connexion pour lesdits réseaux téléphoniques et lesdits ordinateurs Internet.

6. Système de télécommunication sur Internet selon la revendication 5, **caractérisé en ce que** ledit dispositif formant passerelle est adapté afin de supporter des connexions d'appel téléphonique sur Internet entre un ordinateur Internet et un utilisateur desdits réseaux téléphoniques et réciproquement.

7. Système de télécommunication sur Internet selon la revendication 5, ou la revendication 6, **caractérisé en ce que** ledit dispositif formant passerelle est adapté afin de supporter des connexions d'appel téléphonique sur Internet entre des ordinateurs Internet et entre des utilisateurs desdits réseaux téléphoniques.

8. Procédé de traitement d'appel téléphonique sur Internet, comprenant
les étapes de traitement d'une phase de localisation de passerelle, d'une phase de connexion d'appel, d'une phase d'appel connecté et d'une phase de déconnexion d'appel,
la partie appelante étant un utilisateur d'un ordinateur Internet et la partie appelée étant un utilisateur d'un réseau téléphonique, et
**caractérisé en ce que** ladite phase de localisation de passerelle comporte les étapes :
- pour l'utilisateur d'ordinateur :
de composition du numéro, comprenant le code de pays, de la partie appelée, en utilisant un navigateur web de l'ordinateur de l'utilisateur, sous un FORMAT HTML produit par un serveur WWW au niveau dudit dispositif de localisation de passerelle ;
de choix, ou de configuration préalable, d'un logiciel de transmission de voix sur réseau VON requis, et d'un système de facturation pour l'appel ; et
lors de l'activation d'un bouton "soumission", de validation par le navigateur web, du numéro composé et, s'il est de syntaxe correcte, de soumission de l'information au serveur WWW au niveau dudit dispositif de localisation de passerelle ;
- de consultation par le serveur WWW d'un système de désignation qui recherche une passerelle qui minimise la distance de réseau téléphonique utilisée pour l'appel téléphonique, le serveur WWW produisant de nouvelles pages web comportant un bouton de passerelle pouvant être sélectionné avec l'adresse URL associée, correspondant à au moins une passerelle de première préférence, et une passerelle de secondé préférence, chaque URL étant associé au nombre composé par l'utilisateur d'ordinateur ;
- ensuite, d'activation par l'utilisateur d'ordinateur d'un bouton de passerelle et de connexion à un serveur web au niveau de la passerelle ; et
- de transfert du numéro composé à la passerelle, ensemble avec les informations VON et de facturation, l'adresse IP de l'ordinateur appelant étant transférée automatiquement à la passerelle au moyen du protocole HTTP.

9. Procédé selon la revendication 8, **caractérisé en ce que** la validation du numéro composé est réalisée en utilisant un script Java associé au FORMAT HTML.

10. Procédé selon l'une quelconque des revendications 8 à 9, **caractérisé en ce que** ladite phase de connexion d'appel comporte les étapes de :
- transfert par ledit serveur web de passerelle d'une page web avec un bouton "acceptation" et un bouton "annulation" à l'ordinateur appelant ;
- établissement par la passerelle d'une connexion avec l'ordinateur appelant en utilisant ledit logiciel de transmission VON ;
- acceptation par l'utilisateur d'ordinateur de l'appel entrant, s'il n'est pas accepté automatiquement ;
- production par un dispositif IVR de la passerelle un signal de message vocal afin d'informer l'utilisateur d'ordinateur en ce qui concerne :
- les frais qui s'appliquent au numéro de téléphone appelé ; et
- le système de facturation qui a été choisi ;
- et la production, pour l'utilisateur d'ordinateur, de l'instruction de pousser le bouton "acceptation" ;
- pression par l'utilisateur d'ordinateur du bouton "acceptation" provoquant ainsi l'apparition d'une page web de progression d'appel, ladite page web contenant un script Javas qui demande périodiquement de recharger cette page web à partir du serveur ;
- puis, tentative d'établissement par le serveur web de passerelle, d'une connexion d'appel vers le numéro téléphonique appelé, ledit logiciel de transmission VON permettant à l'utilisateur d'ordinateur d'écouter la progression de l'appel ;
- lorsqu'une connexion d'appel est établie, réponse de la partie appelée à l'appel, et
- production d'une demande de paiement initiale vers l'utilisateur d'ordinateur, si "Ecash" est utilisé en tant que procédé de paiement, ou initiation d'un enregistrement de facturation pour l'appel.

11. Procédé selon la revendication 10, **caractérisé en ce que** ladite page web de progression d'appel contient des informations concernant l'état de l'appel et, si "Ecash" est utilisé, elle présente, dans un champ "durée restante", le nombre de secondes restant à utiliser par la partie appelante avant qu'un nouveau dépôt soit nécessaire.

12. Procédé selon la revendication 10, ou la revendication 11, **caractérisé en ce que**, au cours de ladite phase connectée d'appel, ledit procédé comporte les étapes de la page web de progression d'appel consistant à :
informer l'utilisateur d'ordinateur de l'état courant de l'appel ; et
si "Ecash" est utilisé, proposer à l'utilisateur d'ordinateur un bouton de "nouveau dépôt" à activer par l'utilisateur d'ordinateur lorsqu'un nouveau dépôt "Ecash" est requis.

13. Procédé selon la revendication 12, **caractérisé en ce que** l'activation dudit bouton "nouveau dépôt" provoque le démarrage d'un script CGI au niveau du serveur web de passerelle qui produit une demande de paiement "Ecash" pour l'utilisateur d'ordinateur, et **en ce que**, à la réception d'un dépôt "Ecash", le serveur web de passerelle augmente le champ "durée restante" sur la page web de progression d'appel.

14. Procédé selon l'une quelconque des revendications 10 à 13, **caractérisé en ce que** ladite phase de déconnexion d'appel comporte les étapes de :
- dans le cas où une partie ou l'autre interrompt l'appel, le serveur web de passerelle modifie la page web de progression d'appel de manière à informer l'utilisateur d'ordinateur que l'appel a été interrompu, et la raison de l'interruption ;
- proposition à l'utilisateur d'ordinateur de l'option soit de se connecter de nouveau, soit de "quitter" l'appel en utilisant des boutons à cliquer, ; et
dans le cas où l'utilisateur d'ordinateur clique sur le bouton "quitter", connexion de l'ordinateur au dispositif de localisation de passerelle et, si un enregistrement de facturation est ouvert, il est maintenant fermé.

15. Procédé de traitement d'appels téléphoniques sur Internet, comprenant:
les étapes de traitement d'une phase de localisation de passerelle, d'une phase de connexion d'appel, d'une phase d'appel connecté et d'une phase de déconnexion d'appel,
la partie appelante étant un utilisateur d'un réseau téléphonique et la partie appelée étant un utilisateur d'un ordinateur Internet,
**caractérisé en ce que** ladite phase de localisation de passerelle comporte l'étape de composition, par l'utilisateur de réseau téléphonique, du numéro du fournisseur de service de l'utilisateur et son acheminement vers une passerelle qui minimise la distance de réseau téléphonique utilisée,
**en ce que** l'acheminement de l'appel vers une passerelle est réalisé en utilisant des procédés de distribution d'appel automatique afin d'obtenir un équilibre de charge entre les passerelles et
**en ce que** la phase de connexion d'appel comporte les étapes :
- pour l'utilisateur de réseau téléphonique :
de réception d'un signal de message vocal demandant la sélection d'une connexion avec l'un ou l'autre du téléphone ou d'un ordinateur Internet ; et
de sélection de l'ordinateur Internet en utilisant la composition par clavier ;
- de demande à l'utilisateur de réseau téléphonique d'entrée d'un numéro IP, ladite entrée étant renvoyé à l'utilisateur par la passerelle afin d'assurer la vérification par l'utilisateur ;
- de consultation, par un serveur web de la passerelle, d'un serveur DNS afin de vérifier l'adresse de l'ordinateur Internet appelé ;
- d'établissement par la passerelle, lors de la vérification de l'adresse, d'une connexion à l'ordinateur Internet appelé en utilisant un logiciel de transmission de voix sur réseau, VON, approprié, la partie appelante étant informée de l'état de l'appel par des signaux audio de progression d'appel ; et
- lors de l'établissement de la connexion, de réponse de la partie appelée à l'appel.

16. Procédé selon la revendication 15, **caractérisé en ce que** l'accès peut être obtenu soit par :
un numéro de téléphone gratuit, auquel cas il est demandé à la partie appelante de fournir un code PIN, ou
un "taux de base", auquel cas une facturation supplémentaire n'est pas requise.

17. Procédé selon la revendication 15, ou la revendication 16, **caractérisé en ce que** ledit numéro IP est entré soit sous un format 1111#2222#3333#4444#, soit sous un format de nom de domaine aaaa#bbb#cc en utilisant le codage de l'alphabet du clavier, une simple pression du bouton poussoir "1" étant utilisée pour un "a", une double pression pour un "b" etc..

18. Procédé selon l'une quelconque des revendications 15 à 17, **caractérisé, en ce que** le serveur web de passerelle vérifie les capacités du logiciel de transmission VON de l'ordinateur Internet appelant.

19. Procédé selon l'une quelconque des revendications 15 à 18, **caractérisé en ce que**, au cours de la phase de déconnexion d'appel, une partie ou l'autre peut interrompre l'appel, et **en ce que**, dans le cas où la partie appelée raccroche, l'utilisateur de réseau téléphonique a l'option soit d'initier un autre appel, soit de raccrocher.

20. Procédé de traitement d'appel téléphonique sur Internet, comprenant :
les étapes de traitement d'une phase de localisation de passerelle, d'une phase de connexion d'appel, d'une phase d'appel connecté et d'une phase de déconnexion d'appel,
les deux parties appelante et appelée étant chacune un utilisateur d'un réseau téléphonique,
**caractérisé en ce que** le traitement d'appel implique l'utilisation de deux passerelles, l'une d'elles est une passerelle d'entrée utilisée afin d'initier un point d'entrée pour un utilisateur de réseau téléphonique vers Internet, et l'autre est une passerelle de sortie qui est la passerelle sur laquelle l'appel sort d'Internet et entre dans le réseau téléphonique afin d'accéder au numéro appelé,
**en ce que** la phase de localisation de passerelle pour la passerelle d'entrée comporte les étapes :
- pour l'utilisateur de réseau téléphonique :
de composition du numéro vers le fournisseur de service de l'utilisateur et d'acheminement vers une passerelle qui minimise la distance de réseau téléphonique utilisée pour l'appel ;
de réception d'un signal par message vocal demandant la sélection d'une connexion à un réseau téléphonique, ou à un ordinateur Internet ; et
de sélection de la connexion à un réseau téléphonique en utilisant la composition au clavier,
- ensuite, de demande à l'utilisateur de téléphone d'entrer le numéro de téléphone de la partie appelée, l'entrée étant renvoyé à l'utilisateur de téléphone par la passerelle afin d'assurer la vérification par l'utilisateur de téléphone ;
- d'initiation, lors de la vérification du numéro de partie appelée, par la passerelle d'un traitement d'interface proxy pour la partie appelée impliquant la prise de contact dudit système de localisation de passerelle afin d'assurer la localisation d'une passerelle de sortie pour l'appel ;
- de transfert du numéro composé à la passerelle de sortie, ensemble avec les informations de logiciel de transmission de voix sur réseau, VON, et de facturation.

21. Procédé selon la revendication 20, **caractérisé en ce que** l'acheminement de l'appel vers une passerelle est assuré en utilisant des procédés de distribution d'appel automatique afin d'obtenir un équilibre de charge entre les passerelles.

22. Procédé selon la revendication 20, ou la revendication 21, **caractérisé en ce que** l'accès peut être obtenu soit par :
un numéro de téléphone gratuit, auquel cas il est demandé à la partie appelante de fournir un code PIN, ou
un "taux de base", auquel cas une facturation supplémentaire n'est pas requise.

23. Procédé selon l'une quelconque des revendications 20 à 22, **caractérisé en ce que**, au cours de la phase de déconnexion d'appel, une partie ou l'autre peut réaliser une déconnexion, et **en ce que**, dans le cas où une déconnexion est réalisée par la partie appelée, la partie appelante à la possibilité d'initier un autre appel, ou de raccrocher.
